## Europäisches Patentamt

## European Patent Office

## Office européen des brevets

(11) Publication number: **0 044 712**
**B1**

(12)

# EUROPEAN PATENT SPECIFICATION

(45) Date of publication of patent specification: **23.08.89**

(51) Int. Cl.⁴: **C 03 B 37/025**

(21) Application number: **81303273.7**

(22) Date of filing: **16.07.81**

(60) Divisional application 84115975 filed on 20.12.84.

(54) Improvements in and relating to glass fibres for optical communication.

(30) Priority: **17.07.80 GB 8023360**

(43) Date of publication of application:
**27.01.82 Bulletin 82/04**

(45) Publication of the grant of the patent:
**23.08.89 Bulletin 89/34**

(84) Designated Contracting States:
**AT BE CH DE FR GB IT LI LU NL SE**

(56) References cited:
EP-A-0 041 864
CA-A-1 034 818
DE-B-2 623 989
FR-A-2 418 775
JP-A-79 160 826

CHEMICAL ABSTRACTS, vol. 93, no.2, 14th july
1980, page 265, column 1, abstract no 12320n,
Columbus, Ohio, US & JP-A-79160826

(73) Proprietor: **BRITISH TELECOMMUNICATIONS
plc
British Telecom Centre 81 Newgate Street
London EC1A 7AJ (GB)**

(72) Inventor: **Beales, Keith John
8, Stella Maris, Hadleigh Road
Ipswich, Suffolk (GB)**
Inventor: **Day, Clive Richard
15 Hilly Fields
Woodbridge Suffolk (GB)**
Inventor: **Ainslie, Benjamin James
25 Birchwood Drive
Rushmere Ipswich (GB)**

(74) Representative: **Leng, Francis Edward et al
British Telecom Intellectual Property Unit Room
1304 151 Gower Street
London WC1E 6BA (GB)**

(56) References cited:

**APPLIED PHYSICS LETTERS, vol.31, no.8, 15th
october 1977, pages 515-517, T.AKAMATSU et
al,:"Fabrication of graded-index fibers without
an index dip by chemical vapor deposition
method"**

Courier Press, Leamington Spa, England.

(58) References cited:

ELECTRONICS LETTERS, vol.16, no.18, 28th august 1980, pages 692-693, B.J.AINSLIE et al.:"Optimised structure for preparing long ultra-low-loss single-mode fibres"

OPTICAL COMMUNICATION CONFERENCE, 17th-19th september 1979, pages 5.4.1 - 5.4.4, Conference Proceedings, Amsterdam, NL, H. YOKOTA et al.:"Long-length single-mode fiber with low attenuation in the dispersion free region"

ELECTRONICS LETTERS, vol.15, no.15, 5th july 1979, pages 411-413, B.J. AINSLIE et al.:"Preparation of long lengths of ultra-low-loss single-mode fibre"

ELECTRONICS LETTERS, vol.15, no.25, 6th december 1979, pages 835-836, K. CHIDA et al.:"Simultaneous dehydration with consolidation for V.A.D. method"
Electronics letters, vol.14, no.17
Optical Fiber Communications, march 1979, WC 6

## Description

This invention relates to the manufacture of glass fibres for optical communication wherein core and cladding material are vapour-phase deposited on a substrate and in a subsequent stage in the procedure, a solid preform of a fibre is produced.

Vapour phase techniques involve the oxidation of a gaseous silicon compound such as $SiCl_4$ to deposit a layer of silicon dioxide on a substrate. Various dopant materials in a vapour phase are added in a controlled manner to deposit layers which differ in refractive index and in particular a core of a material is formed that has a greater refractive index than the cladding.

$TiO_2$, $GeO_2$, $P_2O_5$, and $Al_2O_3$ are all dopants which have been used in the deposited core layers to increase the refractive index of the glass in that region. By varying the concentration of the dopants in the vapour a gradual refractive index change from the centre to the periphery of the preform can be obtained or alternatively a discrete step in refractive index between the core and cladding regions can be introduced. Both types of profiles are used for multimode fibres. In monomode fibres a step index profile is required in which the core radius is small and in which the difference between the refractive indices of the core and cladding is small compared with a multimode fibre.

Intrinsic losses in $SiO_2$—$GeO_2$ fibres show a marked variation with respect to the wavelength of the transmitted radiation, and a window in the region 1.1 to 1.7 um is generally recognised as the optimum wavelength range. Thus, in a fibre with a $GeO_2$ doped core a pure $SiO_2$ cladding would seem to be the best choice for an ultra-low-loss (<1dB/km) fibre, since it does not introduce any additional absorbtion mechanisms. This is particularly ture in the case of a monomode fibre where 30% of the power in a fibre having a normalised frequency of 2 travels in the cladding.

However, a very high temperature is required for the chemical vapour deposition and sintering of pure silica. Furthermore, heating to this temperature tends to produce distortion in the silica substrate tube. A small amount of $P_2O_5$ added to the deposited silica cladding layers considerably reduces the deposition and sintering temperature, but leads to an increase in the refractive index of the deposited part of the cladding. This higher refractive index region forms part of an undesirable second wave guide with the silica substrate tube acting alone as the cladding. It has previously been proposed, for example, in Electronics Letters 1979 *15* pp 411—413, to add a small amount of a refractive index-reducing dopant to the deposited cladding layers to compensate for the effect of the $P_2O_5$ doping. For the additional dopant, flourine has been proposed.

Such fibres, whilst alleviating the problems of high deposition temperature and of the formation of a secondary waveguide, suffer from the disadvantage of further absorbtion losses in the transmission spectrum, generally resulting from the vibrational absorbtion of bonds between the dopant material and water. In the case of $P_2O_5$ a loss at 1.6 um occurs which is the first overtone of the P—OH vibration at 3.05 um; and possibly also there is a loss at wavelengths greater than 1.5 um due to the tail of the fundamental P—O vibration at 8.1 um.

A specific version of the method is concerned with the manufacture of graded index multimode fibre. The precise control of the core concentration of $GeO_2$ is important for this graded index fibre, and there is a tendency to lose $GeO_2$ from the centre of the core during the collapse of the tube. US Patent Specification 4,165,224 and Applied Physics Letters, Vol. 31, No. 8 of 15 October 1977 at pages 516 and 517 teach the use of mixtures of $GeCl_4$ and $O_2$ during collapse in order to control the loss of $GeO_2$. The $GeCl_4$ decomposes into $Cl_2$ but the amount of the reagent is strictly related to the loss of Ge. There are no indications that water is removed during the collapse of graded index multimode fibre and the $GeCl_4$ is used for a different purpose.

Canadian Patent Specification 1034818 is concerned with extra dopants for the glass to reduce the melting point of the glass. The conditions of the collapse are not discussed.

A known method of manufacturing optical fibre is described in Electronic Letters, Volume 14, number 17, page 534. This document describes a method suitable for the mass fabrication of optical fibres wherein a porous preform has deposited on the outer surface thereof glass particles of relatively lower refractive index. The porous glass rod with deposit is then collapsed to a fibre rod preform. In order to reduce the OH content in the optical fibre produced by this method to a level similar to that of optical fibres produced by the inside deposition process (hereinafter described), the exterior deposition of the glass particles is carried out in a predetermined drying gas which aids the defusion of OH ions from the inside of the porous glass rod to the surface region so that it consequently promotes a dehydration process. In this way, the signal losses in the optical fibre are reduced.

Another method of manufacturing optical fibre is usually known as "rod-in-tube" because its starting materials are a solid rod consisting of pure core glass and a tube consisting of cladding glass. The tube is sized so that the rod is easily introduced into its bore and so that the tube is easily shrunk into contact with the rod. The shrinking is carried out so that the inner surface of the tube becomes fused to the surface of the rod to form an interface which, after stretching, becomes the core/cladding interface of the fibre. The qualities of this interface are important because bubbles or solid inclusions cause scatter which represents substantial attenuation in fibre made by the rod-in-tube process. GB Patent Specification 2037273A, and Dutch Patent Specification NL 7908604 (equivalent to US 4,264,347) described the passage of halogen compounds and elements through its annulus between the rod and the tube before shrinkage. This is intended to remove contamination from the surfaces so as to produce a better interface and thereby reduce scatter.

The present invention concerns the avoidance of absorption mechanisms affecting radiation in the transmission spectra of the optical fibre, and in particular it concerns the reduction of the water content of the fibre. This reduction, which is important, since the −OH bond has a particular strong absorption peak in the 1.4 um region. The invention is not limited to the manufacture of fibres having compensated dopants in the cladding layers, but has applicability to all techniques where layers are deposited in a hollow substrate which is subsequently collapsed to form a preform from which a fibre is drawn.

Although it is known to use chlorine as a drying agent in optical fibre production, by the exterior vapour deposition technique the inventors have found that surprisingly its use in the interior vapour deposition technique during the collapsing step of the substrate tube has a significant effect on the resultant −OH concentration in the central region of the preform.

Accordingly, the inventive features of the present invention and described in the characterising portions of claims 1 and 2.

Embodiments of the invention will now be described by way of example only, with reference to the accompanying drawings. In the drawings:—

Figure 1 is a diagrammatic axial section through a substrate tube;

Figure 2 is a graph of loss per unit length against transmitted wavelength for a number of fibres.

In the process known as the MCVD (modified chemical vapour deposition) process, low loss optical fibres are produced from a solid preform. The preform itself is formed by collapsing a tubular substrate on the inside of which layers of material are deposited by thermal oxidation of chemical vapours. The deposited material is in the form of the solid products of the vapour phase reaction which becomes sintered to a glass layer during the transverse of the heat source.

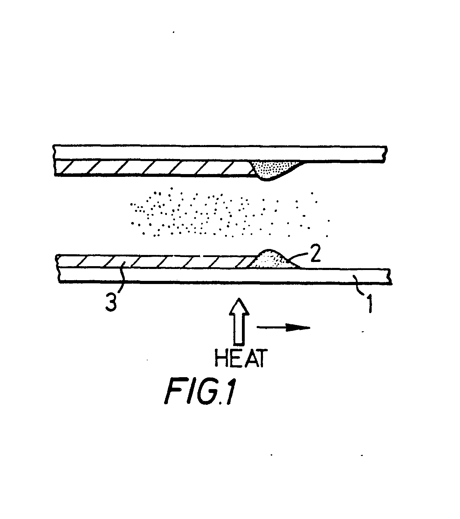

Referring to Figure 1, a substrate tube 1 is formed from pure silica and is rotated about its axis over a source of heat, typically an oxy-hydrogen burner. Combinations of vapours are introduced at one end of the tube and the heater is moved slowly in the direction of vapour flow.

The vapour is primarily $SiCl_4$ but includes chlorides of the dopant substances such as $GeCl_4$ and $POCl_3$. Oxidation of the vapour causes solid products 2 to be deposited inside the tube in a region adjacent the source of heat. The actual deposition mechanism lies between a deposition of soot formed in the vapour and the mechanism of the unmodified process where the solid products are deposited where the hot vapour contacts the less hot region of the substrate tube adjacent the heat source. As the heater passes these regions the deposited material is sintered to form a glass layer 3.

Once the deposition is complete the temperature is increased to 1,700—1,900°C to cause the collapse of the tube to a solid preform. In accordance with one embodiment of the invention chlorine gas is introduced upon the termination of the deposition stage and then continued during the collapse stage. This chlorine vapour is of similar high purity to the other matarials used and has been found by the inventors to have a significant drying effect at this stage in the process. During the collapse stage −OH concentration tends to increase in the tube material, particularly at the exposed, most recently deposited, core layers. This may be due to absorbtion from any remaining hydrogen containing impurities in the carrier gas or by back diffusion. It will be appreciated that this contamination is particularly important in monomode fibres where the transmitted power is concentrated at the centre of the fibre.

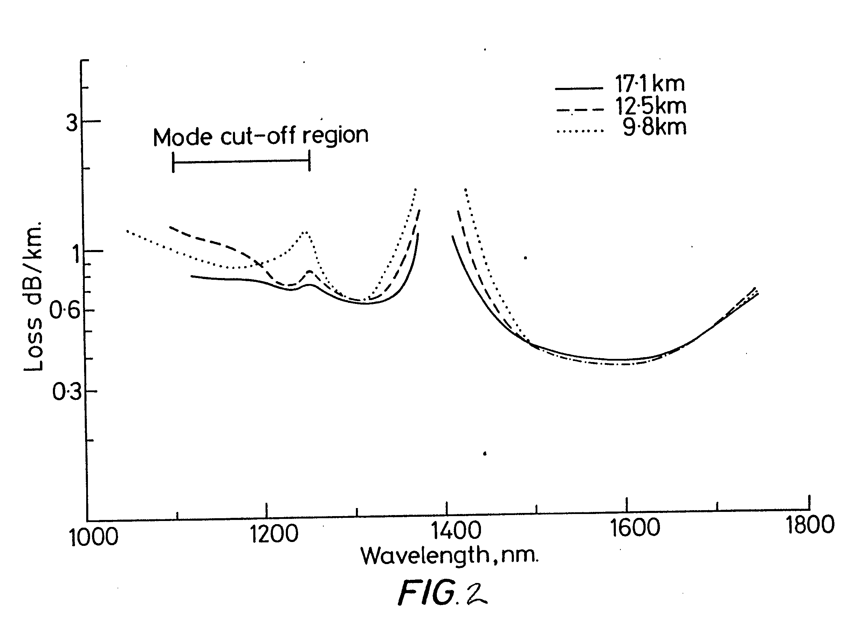

Figure 2 illustrates the loss spectra of three lengths of fibres produced by collapsing the substrate tube and drawing the fibre in one operation, and in which procedure, during the collapse of the preform tube, chlorine was used as a drying agent. The −OH content estimated from the peaks at 1.25 um in long fibre lengths and from measurements at 1.39 μm made on 1 km lengths of fibres was 30 to 100 parts in $10^9$.

The intensity of the −OH overtone at 1.39 um has been reduced to <3dB/km, and further reduction should be possible.

Although in the method described, the chlorine used as a drying agent is introduced as chlorine gas, it could also be obtained from the decomposition of a vapour, such as thionyl chloride which decomposes without causing further deposition.

## Claims

1. A method of manufacturing an optical fibre which includes the steps of vapour phase deposition of layers of cladding and core material for the fibre on the inside of a tubular substrate and subsequently heating the tube to collapse it into a preform of the fibre, the collapse being performed in the presence of chlorine, characterised in that a low loss monomode fibre is prepared and that said chlorine is introduced into the tube in the form of chlorine gas.

2. A method of manufacturing an optical fibre which includes the steps of vapour phase deposition of layers of cladding and core material for the fibre on the inside of a tubular substrate and subsequently heating the tube to collapse it into a preform of the fibre, the collapse being performed in the presence of chlorine which is introduced into the tube in the form of a vapour which decomposes in situ to yield chlorine, characterised in using a vapour which does not produce a solid deposit and that a low loss monomode fibre is prepared.

3. A method according to Claim 2, wherein the vapour is thionyl chloride.

## Patentansprüche

1. Verfahren zur Herstellung einer optischen Faser, das die Schritte der Gasphasenabscheidung von Schichten aus Fasermantel- und -kernmaterial an der Innenseite eines rohrfömigen Substrates mit anschließender Erwärmung des Rohres zum Kollabieren in einen Faserrohling umfaßt, wobei das Kollabieren in Gegenwart von Chlor erfolgt, dadurch gekennzeichnet, daß eine verlustarme Monomodenfaser erzeugt wird und daß das Chlor in das Rohr in Form von Chlorgas eingeleitet wird.

2. Verfahren zur Herstellung einer optischen Faser, das die Schritte der Gasphasenabscheidung von Schichten aus Fasermantel- und -kernmaterial an der Innenseite eines rohrförmigen Substrates mit anschließender Erwärmung des Rohres zum Kollabieren in einen Faserrohling umfaßt, wobei das Kollabieren in Gegenwart von Chlor stattfindet, das in das Rohr in Form von Dampf eingeleitet wird, der sich in situ in Chlor zersetzt, dadurch gekennzeichnet, daß ein Dampf verwendet wird, der keine feste Ablagerung erzeugt, und daß eine verlustarme Monomodenfaser erzeugt wird.

3. Verfahren nach Anspruch 2, bei dem der Dampf aus Thionylchlorid besteht.

## Revendications

1. Un procédé pour fabriquer une fibre optique qui comprend les étapes de dépôt en phase vapeur de couches de matériau de gaine et d'âme pour la fibre sur l'intérieur d'un substrat tubulaire et l'échauffement ultérieur du tube en vue de son affaissement en une préforme de la fibre, l'affaissement étant réalisé en présence de chlore, caractérisé en ce qu'est préparée une fibre monomode à faibles pertes et en ce que ledit chlore est introduit à l'intérieur du tube sous forme de chlore gazeux.

2. Un procédé pour fabriquer une fibre optique qui comprend les étapes de dépôt en phase vapeur de couches de matériau de gaine et d'âme pour la fibre sur l'intérieur d'un substrat tubulaire et l'échauffement ultérieur du tube en vue de son affaissement en une préforme de la fibre, l'affaissement étant réalisée en présence de chlore qui est introduit dans le tube sous forme d'une vapeur qui se décompose in situ pour former du chlore, caractérisé en ce qu'est utilisée une vapeur qui ne produit pas de dépôt solide et en ce qu'est préparée une fibre monomode à faibles pertes.

3. Un procédé selon la revendication 2, dans lequel la vapeur est du chlorure de thionyle.

HEAT

*FIG.1*

FIG. 2